# EUROPÄISCHE PATENTANMELDUNG

(11) **EP 1 598 170 A2**
(43) Veröffentlichungstag der Anmeldung: **23.11.2005**
(21) Anmeldenummer: 05009678.3
(22) Anmeldetag: 03.05.2005
(51) Int. Cl.: B29C 59/00, B23K 26/14

(54) **Verfahren und Vorrichtung zum Trennen eines Materials**

(30) Priorität: 04.05.2004 DE 102004021918
(71) Anmelder: MöllerTech GmbH, 33649 Bielefeld (DE)
(72) Erfinder: Dr. Marcel Salamon, 32457 Porta Westfalica (DE)
(74) Vertreter: Schirmer, Siegfried

(57) **Zusammenfassung**

Die Erfindung betrifft ein Verfahren und eine Vorrichtung zum Trennen eines Materials (2), insbesondere zum Trennen eines Oberflächenmaterials bei einem Bauteil für ein Kraftfahrzeug. Bei dem Verfahren wird das Material (2) mit Hilfe eines durch eine Lichtaustrittsöffnung austretenden Laserstrahls (3) getrennt, indem ein Laserspot, in welchem der Laserstrahl (3) auf das Material (2) trifft, entlang einer Trennlinie in einer Vorschubrichtung geführt wird, wodurch beginnend im Laserspot und entlang der Trennlinie in Vorschubrichtung hinter dem Laserspot getrennte Abschnitte (2a, 2b) des Materials (2) mit einer Trennkante (8, 9) gebildet werden. Die Trennkante (8, 9) eines oder aller getrennten Abschnitte (2a, 2b) und gegebenenfalls benachbarte Bereiche des Materials (2) werden zumindest teilweise versiegelt, indem eine Wärmebehandlung ausgeführt wird, bei der ein durch eine Gasaustrittsöffnung austretendes und erhitztes Gas (10) auf die Trennkante (8, 9) geblasen wird (Fig. 1).

## Beschreibung

Die Erfindung bezieht sich auf ein Verfahren und eine Vorrichtung zum Trennen eines Materials, insbesondere zum Trennen eines Oberflächenmaterials eines Bauteils für ein Kraftfahrzeug.

Bauteile für den Innenraumbereich von Kraftfahrzeugen, insbesondere Verkleidungsteile, werden häufig als Verbundteile mit einem Trägerteil und einem hierauf aufgebrachten Dekormaterial hergestellt. Beispielsweise werden solche Verbundteile mittels Kaschieren eines zuvor hergestellten Trägerteils mit dem Dekormaterial oder mittels Hinterspritzen angefertigt. Beim Hinterspritzen wird eine Kunststoffschmelze direkt in einem Werkzeug mit dem eingelegten Dekormaterial verbunden, bei dem es sich beispielsweise um ein Textil oder eine Textil-Vlies-Kombination handelt. Bei der Herstellung ist es notwendig, daß das Dekormaterial zunächst eine größere Fläche als das fertige Bauteil aufweist, so daß das Dekormaterial in das Werkzeug flächendeckend eingelegt und sicher in dem Werkzeug gehalten werden kann. Überstehende Randabschnitte des Dekormaterials werden nach dem Herstellen des Verbundteils aus Trägerteil und Dekormaterial in einem nachgeschalteten Arbeitsschritt abgeschnitten, insbesondere entlang des äußeren Umfangs des Verbundteils. Hierbei ist auf eine saubere Schnittkante zu achten, was von Bedeutung ist, wenn die Schnittkante des hergestellten Verbundteils beim späteren Einbau in das Kraftfahrzeug im Sichtbereich liegt.

Zum Beschneiden eines derart hergestellten Bauteils werden verschiedene Trennverfahren genutzt. Hierzu gehören beispielsweise das Wasserstrahlschneiden oder das Schneiden bzw. Trennen mittels Laserstrahl. Zunehmend wird als Verfahren das Trennen mittels Laserstrahl verwendet. Bei diesem Verfahren wird ein Laserspot, der durch das Auftreffen des Laserstrahls auf dem zu trennenden Material entsteht, entlang einer Trenn- bzw. Schnittkante geführt. Durch Absorption der Laserstrahlung wird das zu trennende Dekormaterial lokal stark erhitzt, schmilzt und/oder verdampft, wodurch eine Trennfuge entsteht. Gleichzeitig verschmelzen die Trennkanten, so daß das geschnittene Dekormaterial im Bereich der Trennkanten versiegelt wird. Diese Versiegelung verhindert, daß bei der Weiterverarbeitung, dem Transport, dem Einbau und/oder dem späteren Gebrauch des hergestellten Bauteils einzelne Fasern des Dekormaterials aus der Trennkante gelöst werden und hervorstehen, was zu einer ausgefranzten und qualitativ schlechten Trennkante fuhren würde.

Aus wirtschaftlichen Gründen ist es vorteilhaft, den Laserspot mit möglichst großer Vorschubgeschwindigkeit entlang der Trennlinie über das zu trennende Material zu bewegen. Die maximal mögliche Vorschubgeschwindigkeit wird hierbei jedoch nicht nur von der Leistung der verwendeten Laserlichtquelle begrenzt, sondern auch durch die erforderliche Qualität der Trennkante beim Schneiden. Je schneller der Laserspot geführt wird, desto schlechter ist üblicherweise die Qualität der Trennkante hinsichtlich einer gewünschten Gleichmäßigkeit und Versiegelung der Trennkante. Bei ungünstigen Voraussetzungen kann es erforderlich sein, den Laserbeschnitt zumindest in Teilbereichen mit einer sehr langsamen Vorschubgeschwindigkeit durchzuführen, um eine ausreichende Qualität auch bei schwierig zu bearbeiteten Dekormaterialien zu erzielen. Die hierdurch bedingte Erhöhung des Zeitaufwands filr den Beschnitt des hergestellten Bauteils vertonen das Verfahren. Mitunter kann bei bestimmten Dekormaterialien und/oder Schnittgeometrien auch ein stark verlangsamter Schnitt die gewünschte Qualität nicht gewährleisten. Die Trennkante ist dann nicht ausreichend versiegelt, was dazu führt, daß einzelne Fasern des Dekonnaterials sichtbar von der Trennkante abstehen, so daß diese ausgefranst wirkt. Solch Bauteile müssen entweder als Ausschuß entsorgt oder mit hohem Kostenaufwand nachbearbeitet werden.

Aufgabe der Erfmdung ist es, ein Verfahren und eine Vorrichtung zum Trennen eines Materials anzugeben, die einerseits eine hohe Schnittge5chwindigkeit beim Trennen zulassen und die andererseits eine Versiegelung mit gewünschter Qualität der beim Trennen entstehenden Trennkantenbereiche an den voneinander getrennten Abschnitten gewährleisten.

Diese Aufgabe wird erfindungsgemäß durch ein Verfahren nach dem unabhängigen Anspruch 1 sowie eine Vorrichtung nach dem unabhängigen Anspruch 15 gelöst.

Die Erfindung umfaßt den Gedanken, beim Trennen eines Materials, insbesondere beim Trennen eines Oberflächenmaterials eines Bauteils für ein Kraftfahrzeug, das Material mit Hilfe eines durch eine Lichtaustrittsöffnung austretenden Laserstrahls zu trennen, indem ein Laserspot, in welchem der Laserstrahl auf das Material trifft, entlang einer Trennlinie in einer Vorschubrichtung geführt wird, wodurch entlang einer hierdurch gebildeten Trennfuge getrennte Abschnitte des Materials mit einer Trennkante gebildet werden. Die Trennkante eines oder aller getrennten Abschnitte und gegebenenfalls zu der Trennkante benachbarte Bereiche des Materials werden zumindest teilweise versiegelt, indem eine Wärmebehandlung ausgeführt wird, bei der ein durch eine Gasaustrittsöffnung austretendes und erhitztes Gas auf die Trennkante geblasen wird. Beim Blasen des erhitzten Gases kann der Gasstrom so eingestellt werden, daß im wesentlichen nur der Bereich der Trennkannten oder zusätzlich hierzu benachbarte Abschnitte des getrennten Materials, die ebenfalls versiegelt werden sollen, vom Gasstrom erfaßt werden. Eine Vorrichtung, mit der das beschriebene Verfahren ausgeführt werden kann, umfaßt einen Laserkopf zum Bewegen des Laserspots auf der Trennlinie und eine Düseneinrichtung zum Zuführen des erhitzten Gases.

Mit Hilfe des erhitzten Gases wird der Bereich mit der Trennkante einer Wärmebehandlung ausgesetzt, so daß die Trennkante versiegelt wird, wodurch eine Trennkante von hoher Qualität erzeugt wird. Bei dem Verfahren erfolgt die Versiegelung der Trennkante mit Hilfe des erhitzen Gases, wobei auch der Laserstrahl teilweise zur Versiegelung beitragen kann. Die Vorschubgeschwindigkeit beim Trennen kann im Vergleich zu bekannten Verfahren vergrößert werden, da nicht auf eine ausschließliche Versiegelung der Trennkanten durch den Laserstrahl Rücksicht genommen werden muß. Unabhängig hiervon erfolgt die Versiegelung zumindest in wesentlichem Umfang mit Hilfe des erhitzten Gases. Die Verwendung des erhitzten Gasstromes hat hierbei darüber hinaus den Vorteil, daß im Unterschied zur reinen Versiegelung mittels Laserstrahl auch Bereiche benachbart zu der Trennkante erwärmt werden können, was durch den Laserstrahl in der Regel nicht erfolgt, so daß ausgehend von der Trennkante ein Versiegelungsübergangsbereich geschaffen wird. Mit Hilfe der so ausgeführten Versiegelung werden auch hervorstehende Materialreste vermieden. Die Versiegelung wird gleichmäßiger und in ihrer Qualität insgesamt verbessert. Bei dem bekannten Verfahren der Laserversiegelung bleiben häufig einzelne Fasern stehen. Es hat sich überraschend gezeigt, daß diese mittels des erhitzten Gases zuverlässig entfemt werden.

Das erfindungsgemäße Verfahren und die erfindungsgemäße Vorrichtung können grundsätzlich zum Trennen beliebiger Materialien verwendet werden, bei denen die Trennkanten mit Hilfe der Anwendung von Wärme nach einem Laserschnitt versiegelbar sind, wobei eine für die Wärmebehandlung verwendete Temperatur und/oder ein Umfang der Wärmebehandlung in Abhängigkeit vom Anwendungsfall gewählt werden können. Die mit der Erfindung verbundenen Vorteile entfalten -sich insbesondere bei Verwendung des Verfahrens und/oder der Vorrichtung beim Laserbeschnitt eines Verkleidungsbauteils für Kraftfahrzeuge, wobei ein Dekormaterial mittels des Laserstahls geschnitten und eine Trennkante mittels des erhitzten Gases versiegelt wird.

Vorteilhafte Ausgestaltungen der Erfindung sind Gegenstand von abhängigen Unteransprüchen.

Die Erfindung wird im folgenden anhand von Ausführungsbeispielen unter Bezugnahme auf eine Zeichnung näher erläutert. Hierbei zeigen:
- Fig. 1: einen integrierten Trennkopf für ein Verfahren zum Trennen eines Materials, bei dem ein Laserstrahl zum Trennen genutzt wird und entstehende Trennkanten mit Hilfe eines erhitzten Gases versiegelt werden;
- Fig. 2: einen weiteren integrierten Trennkopf für ein Verfahren zum Trennen eines Materials, bei dem ein Laserstrahl zum Trennen genutzt wird und entstehende Trennkanten mit Hilfe eines erhitzten Gases versiegelt werden; und
- Fig. 3: einen gekoppelten Trennkopf für ein Verfahren zum Trennen eines Materials, bei dem ein Laserstrahl zum Trennen genutzt wird und entstehende Trennkanten mit Hilfe eines erhitzten Gases versiegelt werden.

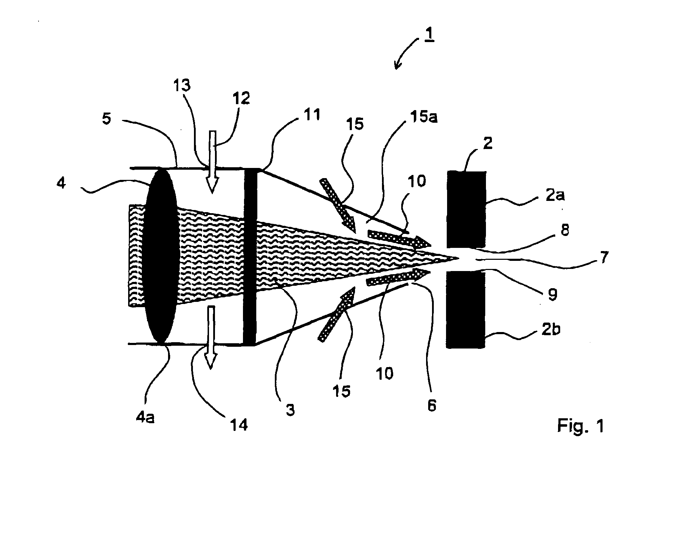

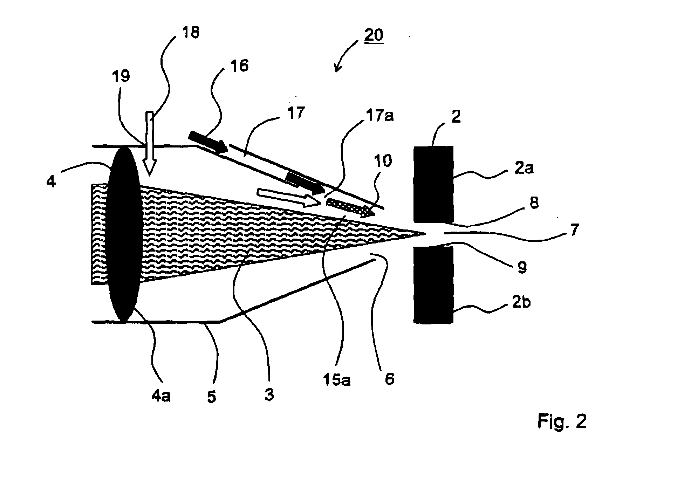

Die Fig. 1 und 2 zeigen Ausführungsformen eines integrierten Trennkopfes 1 und eines weiteren integrierten Trennkopfes 20 zur Nutzung bei einem Trennverfahren zum Trennen eines Materials 2. Für gleiche Merkmale werden in den Fig. 1 und 2 gleiche Bezugszeichen verwendet. Bei dem Verfahren zum Trennen des Materials 2 wird ein Laserstrahl 3 über eine optische Anordnung 4 mit einer Fokussierlinse 4a in einem Gehäuse 5 des integrierten Trennkopfes 1, 20 fokussiert und durch eine Austrittsöffnung 6 auf das Material 2 geleitet. Der Laserstrahl 3 bildet auf dem Material 2 einen Laserspot. Aufgrund der Einwirkung des Laserstrahls 3 auf das Material 2 wird das Material 2 im Bereich des Laserspots lokal stark erhitzt und verbrennt/verdampft, wodurch eine Trennfuge 7 entsteht, die zwischen getrennten Abschnitten 2a, 2b verläuft. Benachbart zu der Trennfuge 7 weisen die getrennten Abschnitte 2a, 2b Trennkanten 8, 9 auf.

Bei beiden Ausführungsformen nach den Fig. 1 und 2 wird durch die Austrittsöffnung 6 weiterhin ein erhitztes Gas 10 in einen Bereich mit einer oder beiden Trennkanten 8, 9 geblasen, um diese zu versiegeln. Die Versiegelung erfolgt insbesondere dadurch, daß Fasern oder andere Randbereiche der getrennten Abschnitte 2a, 2b durch die Warmeeinwirkung des erhitzten Gases 10 angeschmolzen werden. Bei der Ausführungsform nach Fig. 1 wird das erhitzte Gas 10 oberhalb und unterhalb des Laserstrahls 3 auf die Trennkanten 8, 9 geblasen. Im Unterschied hierzu strömt das erhitzte Gas 10 bei der Ausführungsform nach Fig. 2 oberhalb des Laserstrahls 3 aus der Austrittsöffnung 6 nur auf die Trennkante 8.

Mit Hilfe der integrierten Trennköpfe 1, 20 in den Fig. 1 und 2 wird gewährleistet, daß das erhitzte Gas 10 stets direkt an der Trennstelle einwirkt, insbesondere dadurch, daß das erhitzte Gas 10 und der Laserstrahl 3 durch die gemeinsame Austrittsöfmung 6 geleitet werden, welche bei diesen Ausführungsformen eine Gasaustrittsöffnung für das erhitzte Gas 10 und eine Lichtaustrittsöffnung für den Laserstrahl 3 vereinigt. Ist die Temperatur und die Gasdurchflußmenge so eingestellt, daß es zu einer leichten Anschmelzung des Materials 2 kommt, führt dies dazu, daß noch während des Laserschnittes einzelne Randabschnitte, beispielsweise vorstehende Fasern, welche die Wärme des erhitzten Gases 10 nicht abführen können, praktisch vollständig abgeschmolzen und vom Gasstrom entfernt werden, während die Trennkante 8, 9 am Materials 2, welche im Kontakt mit dem Rest des Materials 2 steht und hierdurch nicht so stark vom Gasstrom erwärmt wird, nur leicht angeschmolzen und somit versiegelt wird. Bei geeigneter Wahl der Gastemperatur und des Gasstromes kann eine Ausfransung der Trennkante 8, 9 vermieden werden und gleichzeitig eine Versiegelung der Trennkante 8, 9 erfolgen. Das Verfahren ist besonders wirtschaftlich, da es eine schnelle Vorschubgeschwindigkeit bei guter Qualität der Trennkante 8, 9 ermöglicht, da die Wärmebehandlung zur Versiegelung der Trennkante 8, 9 mittels des erhitzten Gases 10 praktisch gleichzeitig zum eigentlichen Laserschnitt ausführbar ist.

Die Temperatur des erhitzten Gases 10 kann so gewählt werden, daß das erhitzte Gas 10 eine leichte Anschmelzung des Materials 2 im Bereich der Trennkanten 8, 9 und gegebenenfalls benachbart hierzu bewirkt. Zu diesem Zweck sind beispielsweise Temperaturen von 200 °C bis 600 °C, bevorzugt 250 °C bis 350 °C notwendig. Die genaue Temperatur hängt von der Einwirkzeit des erhitzten Gases 10, welche durch die Vorschubgeschwindigkeit beim Lasertrennen bestimmt wird, und dem Gasfluß ab. Bevorzugt wird als erhitztes Gas 10 heiße (gereinigte) Luft oder heißer Stickstoff oder ein Gemisch hiervon verwendet.

Elemente der im integrierten Trennkopf 1, 20 befindlichen optischen Anordnung 4 zur Fokussierung des Laserstrahls 3, die typischerweise eine oder mehrere Linsen umfaßt, bestehen häufig aus Materialien wie ZnSe, Ge oder GaAs, die für die genutzte Laserstrahlung, beispielsweise eine CO₂-Laser-Strahlung, weitgehend durchsichtig sind. Diese Materialien sind gegenüber Temperaturen oberhalb von 300°C unter Umständen nicht dauerhaft beständig. Beim zur Zeit am häufigsten verwendeten Material ZnSe treten bei Temperaturen ab etwa 400°C sogar giftige Zersetzungsprodukte auf. Daher ist es zweckmäßig, eine unerwünschte Aufheizung der optischen Elemente durch den Strom des erhitzte Gases 10 in dem integrierten Trennkopf 1, 20 zu vermeiden.

Gemäß Fig. 1 ist zwischen der Fokussierlinse 4a und der Austrittsöffnung 6 ein Schutzfenster 11 aus einem für die Laserstrahlung durchsichtigem, aber thermisch beständigem Material angeordnet. Der Bereich zwischen Fokussierlinse 4a und Schutzfenster 11 wird mittels kaltem Spülgas 12, welches über eine Einlaßöffnung 13 einströmt und eine Auslaßöffnung 14 ausströmt, gekühlt. Auf diese Weise wird eine Erwärmung der Fokussierlinse 4a durch das erhitzte Gas 10 vermieden. Das erhitzte Gas 10 selbst wird erst vor dem Schutzfenster 11 durch einen Gaseinlaß 15 in einen Gasleitabschnitt 15a in dem integrierten Trennkopf 1 eingeleitet. Als Material für das Schutzfenster 11 kommt beispielsweise künstlicher CVD-Diamant in Frage, der eine ausreichend hohe thermische Beständigkeit besitzt und zudem eine hohe thermische Leitfähigkeit sowie eine geringe thermische Ausdehnung aufweist. So kann das Schutzfenster 11 effektiv gekühlt werden, wodurch eine zu starke Aufheizung vermieden wird. Aufgrund der geringen thermischen Ausdehnung ist ein solches Schutzfenster 11 auch stabil, wenn es auf der Rückseite mit kaltem (Raumtemperatur) und auf der Vorderseite mit heißem (Temperaturen bis 600 °C) Gas umspült wird. Da das Schutzfenster 11 lediglich durchlässig für die Laserstrahlung sein muß, aber im Gegensatz zur Fokussierlinse 4a keine Fokussierung übernehmen muß, kommen auch Materialien in Frage, deren Brechungsindex für die Laserstrahlung zu gering ist, als daß man sie für Linsen verwenden könnte.

Bei der Ausführungsform nach Fig. 2 wird die Aufheizung der Fokussierlinse 4a durch das erhitzte Gas 10 verhindert, indem ein Heißgas 16 erst unmittelbar vor der Austrittsöffnung 6 über einen Heißgas-Einlaß 17 in den integrierten Trennkopf 20 eingelassen wird. Der innere Teil des integrierten Trennkopfes 20 mit der Fokussierlinse 4a wird mit Hilfe eines Kaltgases 18 gekühlt, welches über einen Kaltgas-Einlaß 19 einströmt und sich in einem Gasmischabschnitt 17a kurz vor und/oder im Bereich der Austrittsöffnung 6 mit dem Heißgas 16 vermischt. Mittels der Wahl der jeweiligen Durchflußmengen und der Temperatur des Heißgases 16 kann erreicht werden, daß das so entstehenden, vermischte Gas als erhitztes Gas 10 die benötigte Temperatur zur Versiegelung der Trennkante 8 hat.

Die Ausführungsform nach Fig. 2 hat ferner den Vorteil, daß mittels Steuerung der Gasdurchflußraten für das Heißgas 16 und das Kaltgas 18 die Temperatur des erhitzten Gases 10 flexibel und rasch auf die Vorschubgeschwindigkeit des Laserschnitts eingestellt werden kann. Hierdurch ist es möglich, die Menge und/oder die Temperatur des ausströmenden erhitzten Gases 10 so zu regeln, daß in Bereichen hoher Vorschubgeschwindigkeit ein starker Wärmeeintrag pro Zeiteinheit in die Trennkante 8, 9 erfolgt, während in Bereichen niedriger Vorschubgeschwindigkeit nur ein geringer Wärmeeintrag pro Zeiteinheit in die Trennkante 8, 9 erfolgt. Somit kann, wenn beispielsweise der Laser beim Schneiden sehr langsam um eine Ecke oder einen anderen Bereich komplizierter Geometrie fährt, eine Überhitzung der Trennkante 8, 9 und/oder angrenzender Bereiche effektiv vermieden werden. Zudem ermöglicht die zeitweilige Abschaltung der Zufuhr des Heißgases 16, daß der integrierte Trennkopf bei ausgeschaltetem Laserstrahl 3 über das Material 2 bewegt werden kann, beispielsweise um eine neue Startposition für einen Teilschnitt zu erreichen, ohne daß die Oberfläche des Materials durch austretendes erhitztes Gas 10 beschädigt wird. Das Kaltgas 18 wird weiter zugeführt, so daß der Laserkopf ohne Unterbrechung gespült wird. Es könnte sonst Schmutz eintreten.

Bei herkömmlichen Verfahren zum Laserbeschnitt wird ein sogenanntes Prozeßgas verwendet, welches durch eine Austrittsöffnung des Laserstrahls geleitet wird. Dieses Prozeßgas hat die Aufgabe, eine hinter der Austrittsöffnung liegende Optik des Lasersystems frei von Verbrennungsprodukten und sonstigen Gasen oder Partikeln zu halten, die beim Trennprozeß entstehen können Würden sich diese auf optischen Linsen des Lasersystems niederschlagen, wäre eine starke Absorption die Folge, was zu einer Leistungsminderung und eventuell zu einer Zerstörung der betreffenden Linse führen würde. Das Prozeßgas hat ferner die Aufgabe, beim Trennprozeß infolge der starken Erwärmung entstehende Schmelze, Gase und/oder Partikel aus der Trennfuge auszutreiben. Anderenfalls würden sich Schmelze und Verbrennungsprodukte unkontrolliert am Bauteil niederschlagen und eine Verschmutzung bewirken. Bei den in den Fig. 1 und 2 dargestellten Ausführungsformen übernimmt das erhitzte Gas 10 die Funktionen des Prozeßgas wenigstens teilweise. Als erhitzte Gase kommen alle Gase in Betracht, die auch normalerweise als (kaltes) Prozeßgas verwendet werden.

Bei einer Ausgestaltung der Erfindung kann vorgesehen sein, anstelle der Fokussierlinse 4a oder ergänzend hierzu zur Fokussierung des Laserstrahls 3 Spiegel (nicht dargestellt) verwendet werden, die zum einen aus weitaus temperaturbeständigeren Materialien (Metallen wie zum Beispiel Kupfer) aufgebaut und zum anderen als massive Bauteile von der Rückseite effektiv gekühlt werden können. Das erhitzte Gas 10 wird im vorderen Bereich der optischen Anordnung eingeführt und tritt zusammen mit dem Laserstrahl 3 aus der Austrittsöffnung 6 aus.

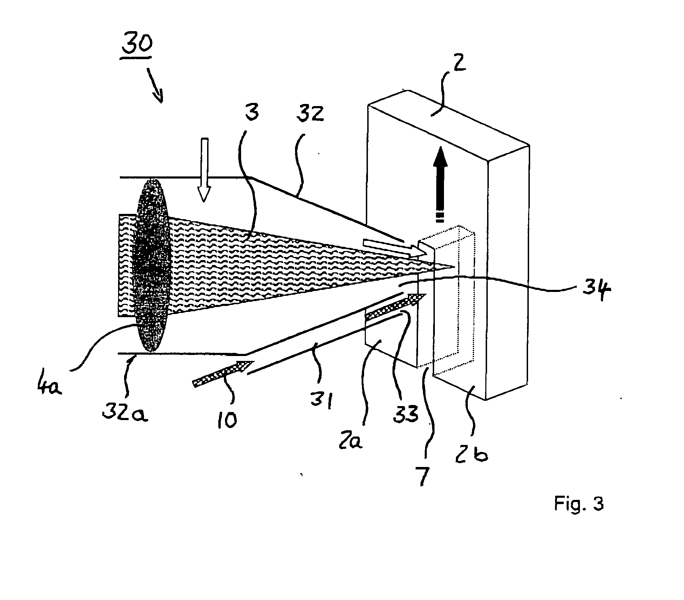

In einer weiteren Ausführungsform ist gemäß Fig. 3 ein gekoppelter Trennkopf 30 zur Nutzung bei einem Trennverfahren zum Trennen eines Materials vorgesehen. Für gleiche Merkmale werden in Fig. 3 gleiche Bezugszeichen wie in den Fig. 1 und 2 verwendet. Bei dem gekoppelten Trennkopf 30 ist eine getrennte Düseneinrichtung 31 auf einer Außenfläche 32a eines getrennten Laserkopfes 32 angeordnet. Das erhitzte Gas 10 wird mit Hilfe der getrennten Düseneinrichtung 31 zugeführt, die mit dem getrennten Laserkopf 32 verbunden ist, mit dem ein Laserstrahl 3 beim Schneiden über das zu trennende Materials 2 geführt wird. Die getrennten Düseneinrichtung 31 und der getrennten Laserkopf 32 sind miteinander starr verbunden, so daß sie gemeinsam beim Schneiden geführt werden können. Auch eine Verbindung zur beweglichen Kopplung zwischen der getrennten Düseneinrichtung 31 und dem getrennten Laserkopf 32 kann vorgesehen sein. Eine Gasaustrittsöffnung 33 ist in der Nähe und separiert von einer Lichtaustrittsöffuung 34 für den Laserstrahl 3 angeordnet. In diesem Fall muß die Führung des getrennten Laserkopfes 32 entlang der Trennlinie so gestaltet werden, daß das erhitzte Gas 10 in die zuvor vom Laserstrahl 3 erzeugte Trennfuge 7 eingeblasen wird. Zur Realisierung komplizierter Geometrien kann es erforderlich sein, die getrennte Düseneinrichtung 31 für das erhitzte Gas verlagerbar so auszuführen, daß die Gasaustrittsöffnung 33 relativ zur Lichtaustrittsöffnung 34 unabhängig von dieser positioniert werden kann. Die Düseneinrichtung 33 für das erhitzte Gas 10 kann drehbar und/oder schwenkbar an dem getrennten Laserkopf 34 montiert sein.

Diese Ausführungsform hat den Vorteil, daß die Zufuhr des erhitzten Gases 10 zur Versiegelung unabhängig von und trotzdem gleichzeitig mit dem Laserschneidprozeß ausführbar ist. Hierdurch läßt sich beispielsweise die Zufuhr des erhitzten Gases 10 drosseln oder abschalten, wenn die Vorschubgeschwindigkeit beim Trennen stark verlangsamt wird, insbesondere zum Beschnitt einer Ecke oder einer komplizierten Geometrie, um eine Überhitzung der Trennkante 8, 9 und/oder angrenzender Bereiche zu verhindern oder um eine Bewegung des Laserkopfes über das Material bei ausgeschaltetem Laserstrahl 3 zu ermöglichen, um beispielsweise eine neue Startposition für einen Teilbeschnitt zu erreichen, ohne daß die Oberfläche des Materials von austretendem erhitztem Gas 10 beschädigt wird. Die relativ zum getrennten Laserkopf 32 verlagerbar angebrachte getrennte Düseneinrichtung 31 für das erhitzte Gas 10 erlaubt es, den Gasstrahl stets dem Laserstrahl 3 nachgeführt in der Trennfuge 7 zu fahren.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausfdhrungsformen von Bedeutung sein.

### Aufstellung der Bezugszeichen:

- 1, 20: integrierter Trennkopf
- 2: Material
- 2a, 2b: getrennte Abschnitte des Materials 2
- 3: Laserstrahl
- 4: optische Anordnung
- 4a: Fokussierlinse
- 5: Gehäuse
- 6: Austrittsöffnung
- 7: Trennfuge
- 8, 9: Trennkannten
- 10: erhitztes Gas
- 11: Schutzfenster
- 12: Spülgas
- 13: Einlaßöffnung
- 14: Auslaßöffnung
- 15: Gaseinlaß
- 15a: Gasleitabschnitt
- 16: Heißgas
- 17: Heißgas-Einlaß
- 17a: Gasmischabschnitt
- 18: Kaltgas
- 19: Kaltgas-Einlaß
- 30: gekoppelter Trennkopf
- 31: getrennte Düseneinrichtung
- 32: getrennter Laserkopf
- 32a: Außenfläche
- 33: Gasaustrittsöffnung
- 34: Lichtaustrittsöffnung

## Patentansprüche

1. Verfahren zum Trennen eines Materials (2), insbesondere zum Trennen eines Oberflächenmaterials eines Bauteils für ein Kraftfahrzeug, bei dem das Material (2) mit Hilfe eines durch eine Lichtaustrittsöffnung austretenden Laserstrahl (3) getrennt wird, indem ein Laserspot, in welchem der Laserstrahl (3) auf das Material (2) trifft, entlang einer Trennlinie in einer Vorschubrichtung geführt wird, wodurch entlang einer hierdurch gebildeten Trennfuge (7) getrennte Abschnitte (2a, 2b) des Materials (2) mit einer Trennkante (8; 9) gebildet werden, **dadurch gekennzeichnet, daß** die Trennkante (8; 9) eines oder aller getrennten Abschnitte (2a, 2b) und gegebenenfalls zu der Trennkante (8; 9) benachbarte Bereiche des Materials (2) zumindest teilweise versiegelt werden, indem eine Wärmebehandlung ausgeführt wird, bei der ein durch eine Gasaustrittsöffnung austretendes und erhitztes Gas (10) auf die Trennkante (8; 9) geblasen wird.

2. Verfahren nach Anspruch 1, **dadurch gekennzeichnet, daß** das Material (2) beim zumindest teilweisen Versiegeln im Bereich der Trennkante (8; 9) und gegebenenfalls in den benachbarten Bereichen angeschmolzen wird.

3. Verfahren nach Anspruch 1 oder 2, **dadurch gekennzeichnet, daß** das Material (2) Fasern enthält und beim zumindest teilweisen Versiegeln Fasern versiegelt werden.

4. Verfahren nach einem der vorangehenden Ansprüche, **dadurch gekennzeichnet, daß** als erhitztes Gas (10) ein Gas mit einer Temperatur von etwa 200°C bis 600°C, vorzugsweise mit einer Temperatur von 250°C bis 350°C, zugeführt wird.

5. Verfahren nach einem der vorangehenden Ansprüche, **dadurch gekennzeichnet, daß** eine Durchflußmenge des erhitzten Gases (10) durch die Gasaustrittsöffnung und/oder die Temperatur des erhitzten Gases (10) in Abhängigkeit von einer Vorschubgeschwindigkeit des Laserspots entlang der Trennlinie geregelt werden.

6. Verfahren nach einem der vorangehenden Ansprüche, **dadurch gekennzeichnet, daß** das erhitzte Gas (10) in einen Bereich mit der Trennkante (8; 9) geblasen wird, welcher den Laserspot und/oder einen hierzu benachbarten Bereich umfaßt.

7. Verfahren nach einem der vorangehenden Ansprüche, **dadurch gekennzeichnet, daß** als erhitztes Gas (10) Luft oder Stickstoff oder ein Gemisch hiervon verwendet werden.

8. Verfahren nach einem der vorangehenden Ansprüche, **dadurch gekennzeichnet, daß** der Laserstrahl (3) in einem Laserkopf mittels einer optische Anordnung (4) zu der Lichtaustrittsöffnung geleitet wird, das erhitzte Gas (10) durch eine Düse geleitet wird, an der die Gasaustrittsöffnung gebildet ist, und der Laserkopf und die Düse als eine verbundene Anordnung gemeinsam beim Trennen des Materials (2) geführt werden.

9. Verfahren nach Anspruch 8, **dadurch gekennzeichnet, daß** die verbundene Anordnung als ein integrierter Trennkopf (1; 20) ausgeführt ist, in welchen der Laserkopf und die Düse integriert sind, und daß der Laserstrahl (3) und das erhitzte Gas (10) durch eine gemeinsame Austrittsöffnung (6) an dem integrierten Trennkopf (1; 20) geleitet werden, die die Lichtaustrittsöffnung und die Gasaustrittsöffnung umfaßt.

10. Verfahren nach Anspruch 9, **dadurch gekennzeichnet, daß** das erhitzte Gas (10) in dem integrierten Trennkopf (1; 20) räumlich getrennt von der optischen Anordnung (4) geleitet wird.

11. Verfahren nach Anspruch 10, **dadurch gekennzeichnet, daß** das erhitzte Gas (10) in dem integrierten Trennkopf (1) von der optischen Anordnung (4) mit Hilfe eines Schutzfensters (11) aus einem thermisch stabilen Material getrennt wird.

12. Verfahren nach einem der Ansprüche 8 bis 11, **dadurch gekennzeichnet, daß** das erhitzte Gas (10) gebildet wird, indem ein Heißgas (16) und ein Kaltgas (18) gemischt werden.

13. Verfahren nach Anspruch 12, **dadurch gekennzeichnet, daß** das Kaltgas (18) Elemente (4a) der optischen Anordnung (4) umströmt werden.

14. Verfahren nach einem der Ansprüche 9 bis 13, **dadurch gekennzeichnet, daß** das erhitzte Gas (10) in einen Raum hinter der gemeinsamen Austrittsöffnung (6) eingebracht und zur gemeinsamen Austrittsöffnung (6) geleitet wird, so daß ein Unterdruck erzeugt wird.

15. Verfahren nach einem der vorangehenden Ansprüche, **dadurch gekennzeichnet, daß** das erhitzte Gas (10) als Prozeßgas für den Lasertrennprozeß verwendet wird.

16. Vorrichtung zum Trennen eines Materials (2), insbesondere zum Trennen eines Oberflächenmaterials eines Bauteils für ein Kraftfahrzeug, mit einem Laserkopf zum Bewegen eines Laserspots, der mit Hilfe eines durch eine Lichtaustrittsoffnung an dem Laserkopf austretenden Laserstrahls (3) auf dem Material (2) gebildet ist, auf einer Trennlinie, entlang welcher das Material (2) getrennt werden soll, und mit einer Düseneinrichtung zum Blasen eines durch eine Gasaustrittsöffnung austretenden und erhitzten Gases (10) auf eine oder mehrere Trennkanten (8; 9), die beim Trennen des Materials (2) an getrennten Abschnitten (2a, 2b) des Materials (2) erzeugt werden, um die Trennkante (8; 9) eines oder aller getrennten Abschnitte (2a, 2b) und gegebenenfalls zu der Trennkante (8; 9) benachbarte Bereiche des Materials (2) zumindest teilweise mit Hilfe einer Wärmebehandlung zu versiegeln.

17. Vorrichtung nach Anspruch 16, **dadurch gekennzeichnet, daß** der Laserkopf und die Düseneinrichtung als eine gekoppelte Anordnung (1; 20; 30) ausgeführt sind, so daß der Laserkopf und die Düseneinrichtung gemeinsam bewegt werden können.

18. Vorrichtung nach Anspruch 17, **dadurch gekennzeichnet, daß** die gekoppelte Anordnung als ein gekoppelter Trennkopf (30) ausgeführt ist, bei dem die Düseneinrichtung (31) außen an dem Laserkopf (32) angebracht ist.

19. Vorrichtung nach Anspruch 17, **dadurch gekennzeichnet, daß** die gekoppelte Anordnung als ein integrierter Trennkopf (1; 20) ausgeführt ist, in welchen der Laserkopf und die Düseneinrichtung integriert sind.

20. Vorrichtung nach Anspruch 19, **dadurch gekennzeichnet, daß** an dem integrierten Trennkopf (1; 20) eine gemeinsame Austrittsöffnung (6) vorgesehen ist, mit der die Lichtaustrittsöffnung und die Gasaustrittsöffnung gebildet sind.

21. Vorrichtung nach Anspruch 19 oder 20, **dadurch gekennzeichnet, daß** in dem integrierten Trennkopf (1; 20) ein von der optischen Anordnung (4) getrennter Gasleitabschnitt (15a) gebildet ist, um das erhitzte Gas (10) räumlich getrennt von der optischen Anordnung (4) zu leiten.

22. Vorrichtung nach Anspruch 21, **dadurch gekennzeichnet, daß** zumindest ein Teilbereich des Gasleitabschnittes (15a) mit Hilfe eines Schutzfensters (11), durch welches der Laserstrahl (3) geleitet wird, von der optischen Anordnung (4) getrennt ist.

23. Vorrichtung nach einem der Ansprüche 19 bis 22, **dadurch gekennzeichnet, daß** der integrierte Trennkopf (20) Zuführmittel (19) zum Einbringen eines Kaltgases (18) zum Umströmen der optischen Anordnung (4) und weitere Zuführmittel (17) zum Einbringen eines Heißgases (16) sowie einen Gasmischabschnitt (17a) aufweist, in welchem das Kaltgas (18) und das Heißgas (16) zum Bilden des erhitzten Gases (10) gemischt werden können.

24. Verwendung eines Verfahrens nach einem der Ansprüche 1 bis 15 oder einer Vorrichtung nach einem der Ansprüche 16 bis 23 zum Schneiden eines Dekormaterials eines Verkleidungsbauteils für ein Kraftfahrzeug beim Beschneiden des Verkleidungsbauteils.
